# EUROPEAN PATENT SPECIFICATION

(11) **EP 2 496 049 B1**
(45) Date of publication and mention of the grant of the patent: **26.08.2015**
(21) Application number: 10826025.8
(22) Date of filing: 13.09.2010
(51) Int. Cl.: H04W 12/02, H04W 60/00, H04W 80/04

(54) **METHOD, HOME AGENT AND USER EQUIPMENT FOR PROCESSING MULTIPLE ACCESS**
VERFAHREN, HEIMAGENT UND BENUTZERVORRICHTUNG ZUR VERARBEITUNG MEHRERER ZUGRIFFE
PROCÉDÉ, AGENT MÈRE ET ÉQUIPEMENT UTILISATEUR DE TRAITEMENT D'ACCÈS MULTIPLE

(30) Priority: 28.10.2009 CN 200910206683
(43) Date of publication of application: 05.09.2012
(73) Proprietor: ZTE Corporation, Shenzhen, Guangdong 518057 (CN)
(72) Inventor: ZHOU, Xiaoyun, Guangdong 518057 (CN)
(74) Representative: Johnson, Richard Alan
(86) International application number: PCT/CN2010/076856
(87) International publication number: WO 2011/050662

(56) References cited:
- WO-A2-2008/110902
- CN-A- 1 875 598
- CN-A- 101 064 938
- CN-A- 101 083 613
- CN-A- 101 335 675
- US-A1- 2005 190 734
- SOLIMAN ELEVATE TECHNOLOGIES N MONTAVONT IT/TELECOM BRETAGNE N FIKOURAS K KULADINITHI UNIVERSITY OF BREMEN H: "Flow Bindings in Mobile IPv6 and Nemo Basic Support; draft-ietf-mext-flow-binding-00.txt", FLOW BINDINGS IN MOBILE IPV6 AND NEMO BASIC SUPPORT; DRAFT-IETF-MEXT-FLOW-BINDING-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. mext, 16 May 2008 (2008-05-16), XP015058488,

## Description

### Field of the Invention

The present invention relates to the communication field, and in particular to a method for processing multiple access, a home agent and a user equipment.

### Background of the Invention

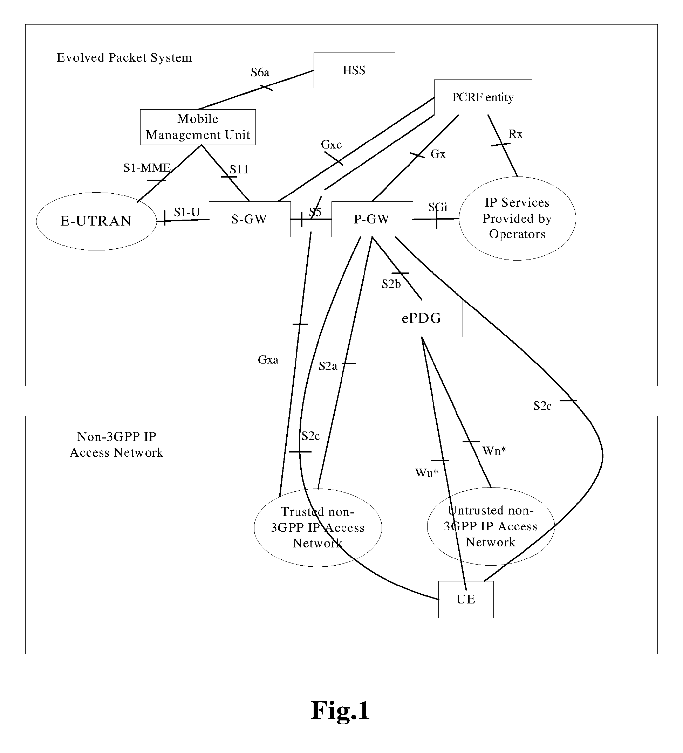

Fig. 1 is a structural diagram of an Evolved Packet System (EPS) according to the related art. As shown in Fig. 1, the EPS is composed of an access network and an Evolved Packet Core (EPC), wherein the access network may be an Evolved Universal Terrestrial Radio Access Network (E-UTRAN), etc., and the EPC includes a Mobility Management Entity (MME), a Serving Gateway (S-GW), a Packet Data Network Gateway (P-GW), a Home Subscriber Server (HSS), a 3rd Generation Partnership Project (3GPP) Authentication, Authorization and Accounting (AAA) server, a Policy and Charging Rules Function (PCRF) and other support nodes.

In the above, the MME is responsible for work related to control plane such as mobility management, non-access layer signal processing and user context management; the S-GW, an access gateway equipment connected with the E-UTRAN, is responsible for forwarding data between the E-UTRAN and the P-GW, and caching paging waiting data; the P-GW, the border gateway between the EPS of the 3GPP and the Packet Data Network (PDN), is responsible for the access from a user terminal to the PDN, and data forwarding between the EPS and the PDN, etc.; the PCRF entity is connected with Internet Protocol (IP) service network of an operator via a reception interface Rx to acquire service information, in addition, it is connected with the gateway of the network via a Gx/Gxa/Gxc interface and responsible for initiating IP bearer establishment, ensuring Quality of Service (QoS) of service data and performing charge control.

The EPS also supports the access of the user equipment (UE) through a non-3GPP system other than the E-UTRAN, wherein the non-3GPP system is accessed via an S2a/b/c interface, and the P-GW serves as a data anchor point between the access of the 3GPP system and the access of non-3GPP system. In the EPS system architecture, the non-3GPP systems are divided into trusted non-3GPP IP access networks and untrusted non-3GPP IP access networks. The trusted non-3GPP IP access networks can be directly connected with the P-GW via an S2a interface, while the untrusted non-3GPP IP access networks need to be connected with the P-GW through an Evolved Packet Data Gateway (ePDG), wherein the interface between the ePDG and the P-GW is S2b. S2c, the interface between the UE and the P-GW, provides control and mobility management by means of the Mobile Internet Protocol Vision 6 (IPV6) Support for Dual Stack Hosts and Routers (DSMIPv6) protocol.

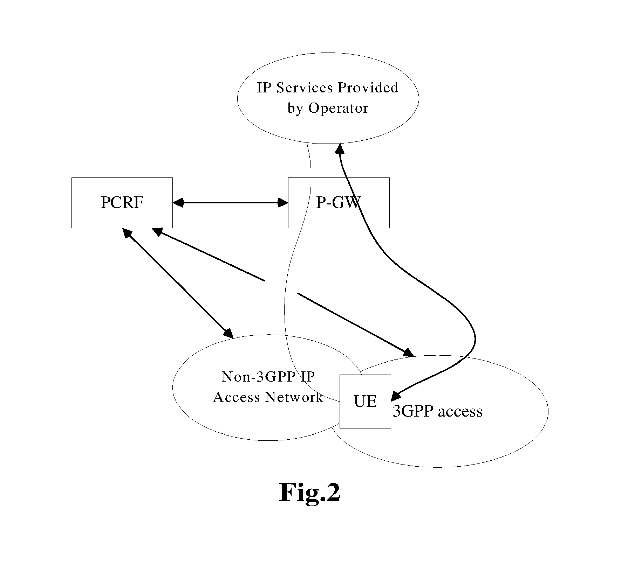

Currently, Multiple Access has become one of the research topics on the EPS, wherein multiple access refers to that the EPC is made to support the simultaneous access of the UE to one PDN through multiple access networks by means of the same P-GW. Fig. 2 is a schematic diagram of the multiple access according to the related art. As shown in Fig. 2, the UE, covered by non-3GPP and 3GPP access at the same time, is accessed to the PDN through the non-3GPP IP access network and 3GPP access network by means of the same P-GW. Under this circumstance, the UE is attached to the EPC through multiple access networks, the P-GW allocates one IP address for the UE, and one PDN connection exists between the UE and the PDN. Since different services are applicable to be transmitted by using different networks, the multiple access technology enables to select suitable access networks to transmit services according to service characteristics. Moreover, multiple access networks can share the network load, thus avoiding network congestion. If the non-3GPP access network is Wireless Fidelity (WiFi), a service data flow of the Hypertext Transfer Protocol (Http) and the File Transfer Protocol (Ftp) can be sent to the UE through the WiFi access network, and a service data flow of the Voice over IP (VoIP) can be sent to the UE through the 3GPP. In the definition of the 3GPP, such multiple access circumstance is also called IP flow mobility.

Since the multiple access technology is the enhancement for the existing EPS system functions, the P-GW and the UE require updates on the premise of minimizing the effect on the existing system. For example, the P-GW shall be capable of supporting to maintain the connection of two tunnels with the 3GPP and non-3GPP access networks simultaneously, receiving data on the two tunnel connections simultaneously, or determining to send, according to policies, service data of the external PDN network to the connection of the 3GPP access network or non-3GPP access network. The UE shall also establish connections with the 3GPP and non-3GPP access networks so as to simultaneously receive data on the two connections or determine to send service data to the connection of the 3GPP access network or the non-3GPP access network according to the policies.

With respect to the UE having multiple access capacity, a multiple access request (namely a request for accessing to the same P-GW through another access network) shall be initiated only when knowing that the P-GW selected by the UE during initial attachment also supports multiple access, otherwise it may lead to errors or affect the user experience.

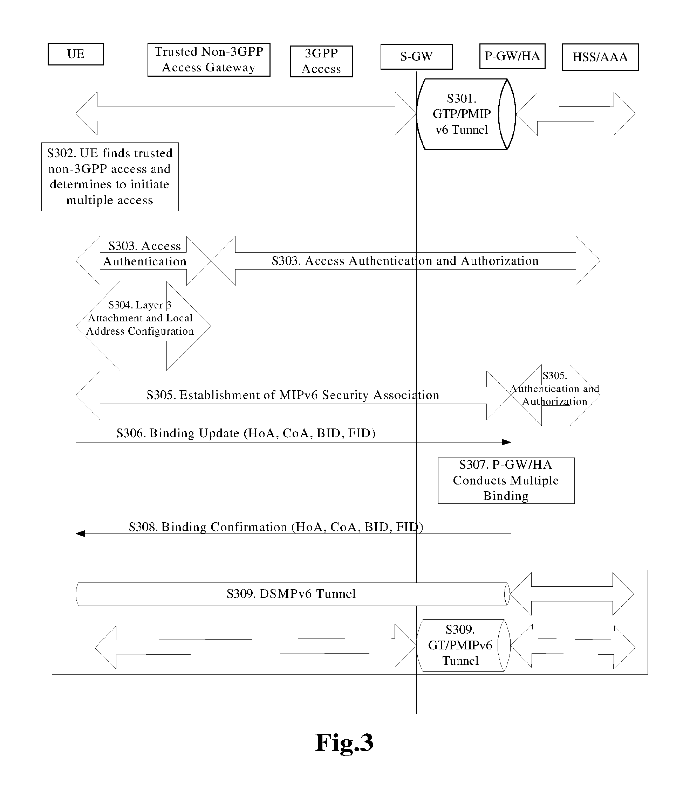

Fig. 3 is a flow chart of the multiple access according to the related art. The flow that the UE performs multiple access through the E-UTRAN and trusted non-3GPP access gateway is shown in the figure, wherein the UE uses the DSMIPv6 protocol when accessing through the trusted non-3GPP, namely S2c access. As shown in Fig. 3, the method includes the following steps S301 to S309.

Step S301, the UE accesses the EPC through the 3GPP access network, wherein a tunnel is established between the S-GW and the P-GW through the General Packet Radio Service Tunnelling Protocol (GTP) or Proxy Mobile IPv6 (PMIPv6), and services may have been transmitted on this tunnel.

Step S302, the UE finds a trusted non-3GPP access network and determines to initiate multiple access.

Step S303, the UE performs access authentication and authorization in the non-3GPP access network.

Step S304, the UE executes layer attachment and obtains the local IP address as a Care of Address (CoA).

Step S305, the UE finds the P-GW selected during 3GPP access through a Mobile IPv6 (MIPv6) self-boot process. A security association is established between the UE and the PDN. The UE initiates the establishment of the security association by using the Internet Key Exchange2 (IKEv2). The Extensible Authentication Protocol (EAP) is used for authentication on the IKEv2. The P-GW interacts with the AAA to complete EPA authentication. Moreover, during this process, the P-GW returns the IP address distributed by the P-GW when the UE accesses to the 3GPP, and the UE uses this IP address as the Home of Address (HoA) during DSMIPv6 binding. At this time, the P-GW performs the function of home agent (HA).

Step S306, the UE sends a DSMIPv6 binding update message to the P-GW/HA, and the binding update message carries HoA, CoA, Banding Identification (BID) and Flow Identification (FID), wherein the BID identifies the binding relationship and also indicates that the UE shall conduct multi-registration binding, namely notify the P-GW to maintain the original GTP/PMIPv6 tunnel established by the UE when accessing to the 3GPP while establishing the DSMIPv6 tunnel between the UE and the P-GW at the same time. The FID uniquely identifies a certain data flow of the service accessed by the user and indicates that the UE binds the data flow identified by the FID to the DSMIPv6 tunnel, namely the service data flow will be transmitted through the trusted non-3GPP access network.

Step S307, after receiving the binding update message, the P-GW/HA carries out multi-registration binding according to the parameters HoA, CoA, BID and FID carried in the message, namely the P-GW simultaneously maintains the GTP/PMIPv6 tunnel with the S-GW and the DSMIPv6 tunnel with the UE.

Step S308, the P-GW/HA returns a binding confirmation message to the UE, wherein the message carries HoA, CoA, BID and FID to confirm that the multi-registration, namely flow binding of the UE has succeeded.

Step S309, the UE completes multiple access. A DSMIPv6 tunnel exists between the UE and the P-GW/HA, and a GTP/PMIPv6 tunnel exists between the S-GW and the P-GW. The UE or the network can determine which access is used for the service data to be transmitted according to the policies.

The flow shown in Fig. 3 is in such a way when supposing the P-GW/HA supports multiple access, namely it is a multi-registration flow binding of the DSMIPv6 protocol. In the present invention, the concepts of multiple access and multi-registration flow binding are the same. With respect to 3GPP defined systems, multi-registration flow binding also refers to IP flow mobility. This means that the P-GW/HA can identify BID and FID carried in Step S305. However, if the P-GW/HA does not support multiple access (namely, does not support IP flow mobility), the P-GW/HA will ignore BID and FID, and will not carry out multi-registration and flow binding. At this time, the P-GW/HA may have two operations: one is that the P-GW/HA performs the CoA and HoA binding and it thinks that the UE conducts switching, the other is the P-GW/HA does not perform any binding. With respect to the two situations above, the P-GW/HA will not carry BID and FID in the confirmation message in Step S307, only now does the UE find that the P-GW does not support multi-registration flow binding, causing that the UE fails to perform multiple access. However, the inconsistence of the P-GW/HA execution with that of the UE has been caused.

Similarly, when the UE firstly uses the DSMIPv6 protocol supporting multi-registration flow binding to access to 3GPP through non-3GPP access gateway, only when the UE sends binding update request to the P-GW/HA, can it find that the P-GW/HA does not support multi-registration flow binding capacity. In the related art, when the UE initiates multi-registration flow binding to the HA, the UE will not find that the HA does not support multi-registration flow binding capacity until the UE sends the binding update request to the HA.

Therefore, in the related art, since the UE does not know the multi-registration flow binding capacity of the HA, incorrect operation or unnecessary signal interaction may be caused.

US 2005/190734 and SOLIMAN ET AL: "Flow Bindings in Mobile IPv6 and Nemo Basic Support; draft-ietf-mext-flow-binding-00.txt", XP015058488, 16 May 2008 provide respective technical solutions relating to IPv6 extensions; however, the above mentioned problem still remains unsolved.

### Summary of the Invention

According to the present invention, a method for processing multiple access as set forth in claim , 1, a home agent as set forth in claim 6 and a user equipmnet as set forth in claim 10 are provided. Embodiments of the invention are claimed in the dependent claims. The present disclosure is put forward with respect to the problem of incorrect operation and unnecessary signal interaction generated because the UE does not know the multi-registration flow binding capacity of the HA. Therefore, the present disclosure mainly provides a multiple access processing solution to address the problem above.

To realize the purpose above, a method for processing multiple access is provided according to one aspect of the present invention.

The method for processing multiple access according to the present disclosure includes:
when a user equipment establishes a Mobile Internet Protocol Version 6 (MIPV6) security association with a home agent, the home agent sending first indication information to the user equipment, wherein the first indication information is used to indicate to the user equipment that the home agent is able to support multi-registration flow binding.

Preferably, the user equipment determining whether to initiate multi-registration flow binding to the home agent according to the first indication information after the home agent sends the first indication information to the user equipment.

Preferably, the step of sending the first indication information to the user equipment by the home agent includes: the home agent receiving a message from the user equipment, wherein the message carries information inquiring whether the home agent supports multi-registration flow binding; and the home agent sending the first indication information to the user equipment according to the message.

Preferably, before sending the first indication information to the user equipment by the home agent, the home agent receives second indication information from the user equipment, wherein the second indication information is used to indicate to the home agent that the user equipment is able to support multi-registration flow binding.

Preferably, the home agent includes: a Packet Data Network Gateway (P-GW).

To realize the purpose above, a home agent is provided according to another aspect of the present disclosure.

The home agent according to the present disclosure includes: a first sending module, configured to send, when a user equipment establishes a Mobile Internet Protocol Version 6 (MIPV6) security association with the home agent, first indication information to the user equipment, wherein the first indication information is used to indicate to the user equipment that the home agent is able to support multi-registration flow binding.

Preferably, the first sending module includes: a receiving sub-module, configured to receive a message from the user equipment, wherein the message carries information inquiring whether the home agent supports multi-registration flow binding; and a sending sub-module, configured to send the first indication information to the user equipment according to the message.

Preferably, the home agent also includes: a first receiving module, configured to receive second indication information from the user equipment, wherein the second indication information is used to indicate to the home agent that the user equipment is able to support multi-registration flow binding.

To realize the purpose above, a user equipment is provided according to another aspect of the present disclosure.

The user equipment according to the present disclosure includes: a second receiving module, configured to receive, when the user equipment establishes a Mobile Internet Protocol Version 6 (MIPV6) security association with a home agent, first indication information from the home agent, wherein the first indication information is used to indicate to the user equipment that the home agent is able to support multi-registration flow binding; and a determination module, configured to determine whether to initiate multi-registration flow binding to the home agent according to the first indication information.

Preferably, the user equipment also includes: a second sending module, configured to send a message to the home agent, wherein the message carries information inquiring whether the home agent supports multi-registration flow binding.

In the present disclosure, when the UE establishes a security association with the HA, the HA returns an indication that the HA supports multi-registration flow binding capacity, which solves the problem that incorrect operation and unnecessary signal interaction may take place since the UE does not know the multi-registration flow binding capacity of the HA in the related art, thus reducing unnecessary signal interaction during multiple access and improving system efficiency.

### Brief Description of the Drawings

The accompanying drawings disclosed herein, constituting a part of the Specification for further understanding the present invention, illustrate the present invention together with the exemplary embodiments without limiting the present invention. Wherein:
Fig. 1 is a schematic diagram of the architecture of the EPS system according to the related art;
Fig. 2 is a schematic diagram of the multiple access according to the related art;
Fig. 3 is a flow chart of the multiple access according to the related art;
Fig. 4 is a flow chart of the method for processing multiple access according to Embodiment 1 of the present invention;
Fig. 5 is a flow chart of the method for processing multiple access according to Embodiment 2 of the present invention;
Fig. 6 is a block diagram of the architecture of the HA according to an embodiment of the present invention;
Fig. 7 is a block diagram of the architecture of the UE according to an embodiment of the present invention; and
Fig. 8 is a block diagram of the preferred architecture of the UE according to an embodiment of the present invention.

### Detailed Description of the Embodiments

It shall be noted that the embodiments in the present invention and the characteristics in the embodiments can be mutually combined if no conflict occurs. The present invention will be further illustrated hereinafter in conjunction with the exemplary embodiments and accompanying drawings.

In the embodiments below, the steps shown in the flow charts of the figures can be carried out, such as, in a group of computer systems of which the computers are capable of executing instructions. In addition, although the flow charts show logical sequences, in some cases, the steps shown or described herein can be carried out in other sequences.

In the embodiments below, considering the problem that incorrect operation and unnecessary signal interaction may take place since a UE does not know the multi-registration flow binding capacity (with respect to systems defined by the 3GPP, namely the IP flow mobility capacity) of an HA, a method for processing multiple access is provided, including: when a UE establishes an MIPv6 security association with an HA, the HA sends first indication information to the UE, wherein the first indication information is used to indicate to the UE that the HA is able to support multi-registration flow binding.

Preferably, during implementation, after the HA sends the first indication information to the UE, the UE can determine whether to initiate multi-registration flow binding to the HA according to the first indication information.

The HA can send the first indication information to the UE after receiving a message from the UE, and send the first indication information to the UE according to this message wherein the message from the UE carries information inquiring whether the HA supports multi-registration flow binding.

Preferably, before sending the first indication information to the UE, the HA can receive second indication information from the UE, wherein the second indication information is used to indicate to the HA that the UE is able to support multi-registration flow binding.

Preferably, the HA may be an individual HA, or located in a P-GW.

In systems defined by the 3GPP, multi-registration flow binding refers to IP flow mobility.

In the embodiments below, the HA is a host or router in a home network of mobile nodes. The embodiments below are illustrated with a P-GW as an example in combination with the preferred implementation modes above.

### Embodiment 1

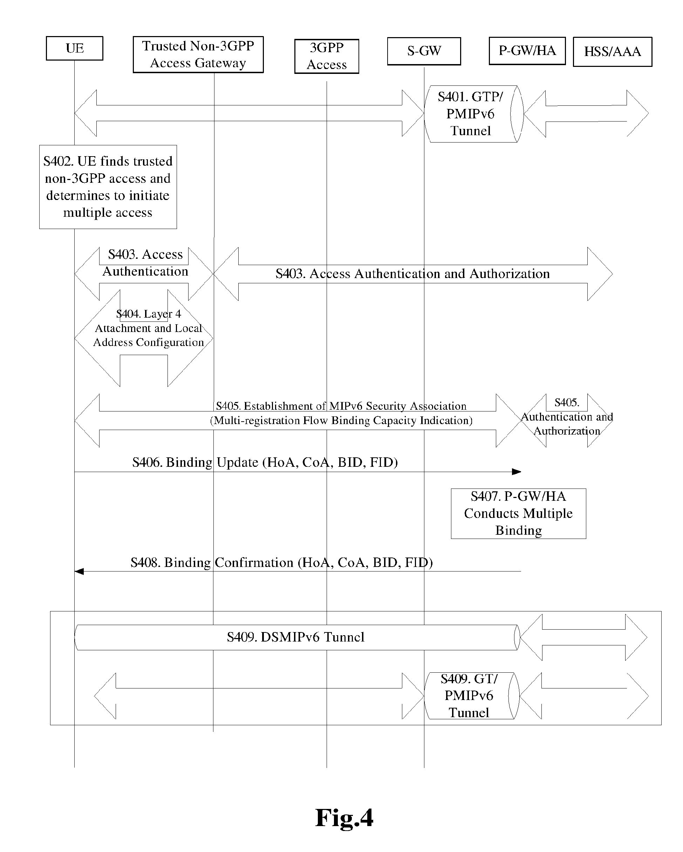

Fig. 4 is a flow chart of the method for processing multiple access according to Embodiment 1 of the present invention, wherein the UE uses DSMIPv6 protocol when being connected through trusted non-3GPP, namely an S2c access. As shown in Fig. 4, the method includes steps S401 to S409 as follows.

Step S401, the UE accesses an EPC through a 3GPP access network, wherein a tunnel is established between an S-GW and a P-GW by means of GTP protocol or PMIPv6 protocol, and services may have been transmitted on the tunnel.

Step S402, the UE finds a trusted non-3GPP access network and determines to initiate multiple access.

Step S403, the UE performs access authentication and authorization in the non-3GPP access network.

Step S404, the UE executes layer attachment and obtains the local IP address as a CoA.

Step S405, the UE finds the P-GW selected during 3GPP access through an MIPv6 self-boot process. A security association is established between the UE and the P-GW/HA. The UE initiates the establishment of the security association by using the IKEv2. The EAP is used for authentication on the IKEv2. The P-GW/HA interacts with the AAA to complete EPA authentication. Moreover, during this process, the P-GW/HA returns the IP address distributed by the P-GW when the UE accesses to the 3GPP, the UE uses this IP address as the HoA during DSMIPv6 binding, and at the same time the P-GW/HA returns to the UE an indication that the P-GW/HA supports multi-registration flow binding capacity.

Step S406, the UE sends a DSMIPv6 binding update message to the P-GW/HA according to the multi-registration flow binding capacity indication (namely IP flow mobility capacity indication) returned by the P-GW/HA, and the binding update message carries HoA, CoA, BID and FID, wherein the BID identifies the binding relationship and also indicates that the UE shall conduct multiple-registration binding, namely notify the P-GW to maintain the original GTP/PMIPv6 tunnel established by the UE when accessing to the 3GPP while establishing the DSMIPv6 tunnel between the UE and the P-GW at the same time. The FID uniquely identifies a certain data flow of the service accessed by the user and indicates that the UE binds the data flow identified by the FID to the DSMIPv6 tunnel, namely the service data flow will be transmitted through the trusted non-3GPP access network.

Step S407, after receiving the binding update message, the P-GW/HA carries out multiple-registration binding according to the parameters HoA, CoA, BID and FID carried in the binding update message, namely the P-GW simultaneously maintains the GTP/PMIPv6 tunnel with the S-GW and the DSMIPv6 tunnel with the UE.

Step S408, the P-GW/HA returns a binding confirmation message to the UE, wherein the message carries HoA, CoA, BID and FID to confirm that the multiple registration of the UE has succeeded.

Step S409, the UE completes multiple access. A DSMIPv6 tunnel exists between the UE and the P-GW/HA, and a GTP/PMIPv6 tunnel exists between the S-GW and the P-GW. The UE or the network can determine which access is used for the service data to be transmitted according to the policies.

Alternatively, in Step S405, when the UE and the P-GW/HA establish a security association, the UE sends to the P-GW/HA an indication that the UE supports multi-registration flow binding (namely IP flow mobility capacity indication) or an indication inquiring whether the P-GW supports multi-registration flow binding capacity (namely IP flow mobility capacity indication), and then the P-GW/HA sends the indication that the P-GW/HA supports multi-registration flow binding capacity (namely IP flow mobility capacity indication) according to that indication.

### Embodiment 2

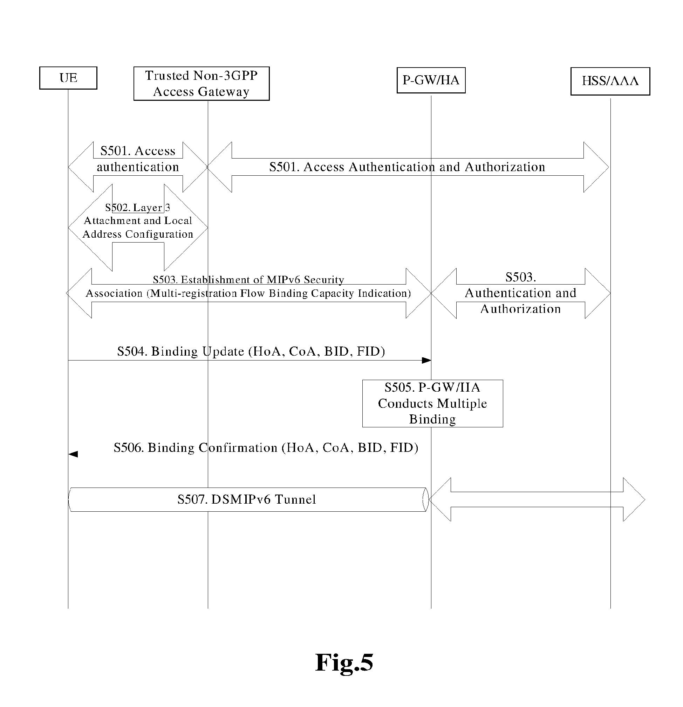

Fig. 5 is a flow chart of the method for processing multiple access according to Embodiment 2 of the present invention. As shown in Fig. 5, the method includes steps S501 to S507 as follows.

Step S501, the UE performs access authentication and authorization in a non-3GPP access network.

Step S502, the UE executes layer attachment and obtains a local IP address as a CoA.

Step S502, the UE selects a P-GW/HA according to an Access Point Name (APN) during an MIPv6 self-boot process. A security association is established between the UE and the P-GW/HA. The UE initiates the establishment of the security association by using the IKEv2. The EAP is used for authentication on the IKEv2. The P-GW/HA interacts with the AAA to complete EPA authentication. Moreover, during this process, the P-GW/HA allocates an IP address for the UE and the UE uses this IP address as the HoA during DSMIPv6 binding. At the same time, the P-GW/HA returns to the UE an indication that the P-GW/HA supports multi-registration flow binding capacity (namely an IP flow mobility capacity indication).

Step S504, the UE sends a DSMIPv6 binding update message to the P-GW/HA according to the multi-registration flow binding capacity indication (namely IP flow mobility capacity indication) returned by the P-GW/HA, and the message carries HoA, CoA, BID and FID, wherein the BID identifies the binding relationship and also indicates that the UE shall conduct multiple-registration flow binding, namely notify the P-GW/HA that the UE will realize multi-registration flow binding in later service development. The FID uniquely identifies a certain data flow of the service accessed by the user and indicates that the UE binds the data flow identified by the FID to the DSMIPv6 tunnel, namely the service data flow will be transmitted through the trusted non-3GPP access network.

Step S505, after receiving the binding update message, the P-GW/HA carries out multiple-registration binding according to the parameters HoA, CoA, BID and FID carried in the binding update message. At this time, a DSMIPv6 tunnel accessing to the system through trusted non-3GPP is established by the UE, and all the flows will be transmitted through this tunnel.

Step S506, the P-GW/HA returns a binding confirmation message to the UE, wherein the message carries HoA, CoA, BID and FID to confirm that the multiple registration flow binding of the UE has succeeded.

Step S507, a DSMIPv6 tunnel exists between the UE and the P-GW/HA, and multi-registration flow is realized, which makes provision for the UE accessing through multiple access networks and establishing multiple tunnels later.

Alternatively, in Step S503, when the UE and the P-GW/HA establishes a security association, the UE sends to the P-GW/HA an indication that the UE supports multi-registration flow binding (namely IP flow mobility capacity indication) or an indication inquiring whether the P-GW supports multi-registration flow binding capacity (namely IP flow mobility capacity indication), and then the P-GW/HA sends the indication that the P-GW/HA supports multi-registration flow binding capacity (namely IP flow mobility capacity indication) according to that indication.

### Embodiment 3

An HA and a UE are provided in this embodiment. The HA and the UE can be used to realize the method in the embodiments or preferred embodiments above.

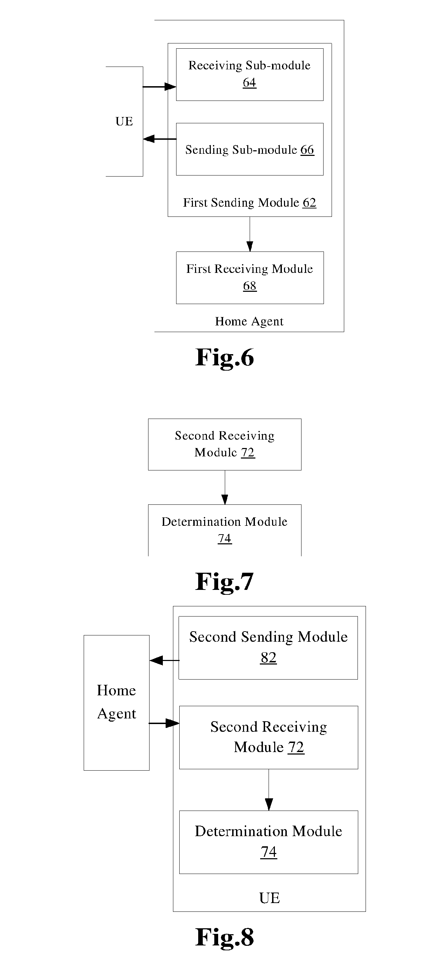

Fig. 6 is a block diagram of the architecture of the HA according to an embodiment of the present invention. As shown in Fig. 6, the device includes: a first sending module 62, configured to send, when the UE establishes an MIPV6 security association with the HA, first indication information to the UE, wherein the first indication information is used to indicate to the UE that the HA is able to support multi-registration flow binding. In the systems defined by the 3GPP, multi-registration flow binding refers to IP flow mobility.

In the device, the first sending module 62 includes: a receiving sub-module 64 and a sending sub-module 66, the architecture will be illustrated in detail hereinafter.

The receiving sub-module 64 is configured to receive a message from the UE, wherein the message carries information inquiring whether the HA supports multi-registration flow binding; and the sending sub-module 66 is configured to send the first indication information to the UE according to the message.

The HA also includes: a first receiving module 68, configured to receive second indication information from the UE, wherein the second indication information is used to indicate to the HA that the UE is able to support multi-registration flow binding.

Fig. 7 is the block diagram of the architecture of the UE according to an embodiment of the present invention. As shown in Fig. 7, the device includes: a second receiving module 72 and a determination module 74, and the architecture will be illustrated in detail hereinafter.

The second receiving module 72 is configured to receive, when the UE establishes an MIPV6 security association with an HA, the first indication information from the HA, wherein the first indication information is used to indicate to the UE that the HA is able to support multi-registration flow binding; and the determination module 74 is connected to the second receiving module 72 and is configured to determine whether to initiate multi-registration flow binding to the HA according to the first indication information.

Fig. 8 is a block diagram of the preferred architecture of the UE according to an embodiment of the present invention. As shown in Fig. 8, the UE also includes: a second sending module 82, configured to send a message to the HA, wherein the message carries indication inquiring whether the HA supports multi-registration flow binding.

It shall be noted that the HA and the UE described in the device embodiments are corresponding to the method in the embodiments and preferred embodiments above. Since the specific implementation has been illustrated, it will not be detailed herein.

To sum up, the problem that incorrect operation and unnecessary signal interaction may take place since the UE does not know the multi-registration flow binding capacity of the Home Agent in the related art is solved by means of using the present invention, thus reducing unnecessary signal interaction during multiple access and improving system efficiency.

It is obvious for those skilled in this art that, the abovementioned modules or steps of the present invention can be also realized by a general computer device. They can be integrated in a single computer device or distributed on the network composed of several computer devices, or alternatively achieved by executable codes of a computer device, so as to store them in a storage unit for execution by a computer device, or make them into different integrated circuit modules or make multiple modules or steps of them to a single integrated circuit module for realization of the present invention. In this way, the present invention is not restricted to the combination of any specific hardware and software.

Above description is only to illustrate the preferred embodiments but not to limit the present invention, which is subject to alteration and change for those skilled in this art. Any such change, equivalent substitution or improvement made within the principle of the present invention should be covered in the scope of protection of the present invention.

## Claims

1. A method for processing multiple access, comprising:
when a user equipment establishes a Mobile Internet Protocol Version 6,MIPV6, security association with a home agent, the home agent sending first indication information to the user equipment, wherein the first indication information is used to indicate to the user equipment that the home agent is able to support multi-registration flow binding; and
after sending the first indication information to the user equipment by the home agent, the method further comprising: the user equipment determining whether to initiate multi-registration flow binding to the home agent according to the first indication information.

2. The method according to Claim 1, wherein the step of sending the first indication information to the user equipment by the home agent comprises:
the home agent receiving a message from the user equipment, wherein the message carries information inquiring whether the home agent supports multi-registration flow binding; and
the home agent sending the first indication information to the user equipment according to the message.

3. The method according to Claim 1, wherein before sending the first indication information to the user equipment by the home agent, the method further comprises:
the home agent receiving second indication information from the user equipment, wherein the second indication information is used to indicate to the home agent that the user equipment is able to support multi-registration flow binding.

4. The method according to any one of Claims 1 to 3, wherein the home agent comprises: a Packet Data Network Gateway, P-GW.

5. The method according to any one of Claims 1 to 4, wherein in systems defined by the 3rd Generation Partnership Project, 3GPP, the multi-registration flow binding is IP flow mobility.

6. A home agent, comprising:
a first sending module (62), configured to send, when a user equipment establishes a Mobile Internet Protocol Version 6,MIPV6, security association with the home agent, first indication information to the user equipment, wherein the first indication information is used to indicate to the user equipment that the home agent is able to support multi-registration flow binding, the user equipment determining whether to initiate multi-registration flow binding to the home agent according to the first indication information.

7. The home agent according to Claim 6, wherein the first sending module 62 comprises:
a receiving sub-module (64), configured to receive a message from the user equipment, wherein the message carries information inquiring whether the home agent supports multi-registration flow binding; and
a sending sub-module (66), configured to send the first indication information to the user equipment according to the message.

8. The home agent according to Claim 6, wherein the home agent further comprises:
a first receiving module (68), configured to receive second indication information from the user equipment, wherein the second indication information is used to indicate to the home agent that the user equipment is able to support multi-registration flow binding.

9. The home agent according to any one of Claims 6 to 8, wherein in systems defined by the 3rd Generation Partnership Project, 3GPP, the multi-registration flow binding is IP flow mobility.

10. A user equipment, comprising:
a second receiving module (72), configured to receive, when the user equipment establishes a Mobile Internet Protocol Version 6 ,MIPV6, security association with a home agent, first indication information from the home agent, wherein the first indication information is used to indicate to the user equipment that the home agent is able to support multi-registration flow binding; and
a determination module (74), configured to determine whether to initiate multi-registration flow binding to the home agent according to the first indication information.

11. The user equipment according to Claim 10, wherein the user equipment further comprises:
a second sending module (82), configured to send a message to the home agent, wherein the message carries information inquiring whether the home agent supports multi-registration flow binding.

## Patentansprüche

1. Verfahren zur Verarbeitung eines Mehrfachzugriffs, umfassend:
das Senden von ersten Anzeige-Informationen durch den Heimagenten an eine Benutzervorrichtung, wenn die Benutzervorrichtung eine Mobile-Internet-Protokoll-Version 6,MIPV6, eine Sicherheitszuordnung zu einem Heimagenten, erstellt, worin die ersten Anzeige-Informationen verwendet werden, der Benutzervorrichtung anzuzeigen, dass der Heimagent in der Lage ist, ein Multi-Registrierungs-Fluss-Binden zu unterstützen; und,
nachdem die ersten Anzeige-Informationen an die Benutzervorrichtung durch den Heimagenten gesandt worden sind, umfasst das Verfahren weiters: das Bestimmen durch die Benutzervorrichtung, ob ein Multi-Registrierungs-Fluss-Binden an den Heimagenten gemäß den ersten Anzeige-Informationen gestartet werden soll.

2. Verfahren nach Anspruch 1, worin der Schritt, die ersten Anzeige-Informationen an die Benutzervorrichtung durch den Heimagenten zu senden, Folgendes umfasst:
das Empfangen einer Nachricht durch den Heimagenten von der Benutzervorrichtung, worin die Nachricht Informationen enthält, mit denen abgefragt wird, ob der Heimagent das Multi-Registrierungs-Fluss-Binden unterstützt; und
das Senden der ersten Anzeige-Informationen durch den Heimagenten an die Benutzervorrichtung gemäß der Nachricht.

3. Verfahren nach Anspruch 1, worin das Verfahren, bevor die ersten Anzeige-Informationen an die Benutzervorrichtung durch den Heimagenten gesandt werden, ferner Folgendes umfasst:
das Empfangen durch den Heimagenten von zweiten Anzeige-Informationen von der Benutzervorrichtung, worin die zweiten Anzeige-Informationen verwendet werden, den Heimagenten darauf hinzuweisen, dass die Benutzervorrichtung in der Lage ist, ein Multi-Registrierungs-Fluss-Binden zu unterstützen.

4. Verfahren nach einem der Ansprüche 1 bis 3, worin der Heimagent Folgendes umfasst: ein Paketdatennetzwerk-Gateway, P-GW.

5. Verfahren nach einem der Ansprüche 1 bis 4, worin in durch das dritte Generation-Partnerschaft-Projekt, das 3GGP, definierten Systemen das Multi-Registrierungs-Fluss-Binden eine IP-Flussmobilität ist.

6. Heimagent, umfassend:
ein erstes Sendemodul (62), das konfiguriert ist, erste Anzeige-Informationen an die Benutzervorrichtung zu senden, wenn eine Benutzervorrichtung eine Mobile-Internet-Protokoll-Version 6,MIPV6, Sicherheitszuordnung mit dem Heimagenten, erstellt, worin die ersten Anzeige-Informationen dafür verwendet werden, der Benutzervorrichtung anzuzeigen, dass der Heimagent in der Lage ist, ein Multi-Registrierungs-Fluss-Binden zu unterstützen, wobei die Benutzervorrichtung bestimmt, ob ein Multi-Registrierungs-Fluss-Binden an den Heimagenten gemäß den ersten Anzeige-Informationen gestartet werden soll.

7. Heimagent nach Anspruch 6, worin das erste Sendemodul (62) Folgendes umfasst:
ein Empfangs-Untermodul (64), das konfiguriert ist, eine Nachricht von der Benutzervorrichtung zu empfangen, worin die Nachricht Informationen enthält, mit denen abgefragt wird, ob der Heimagent ein Multi-Registrierungs-Fluss-Binden unterstützt; und
ein Sende-Untermodul (66), das konfiguriert ist, die ersten Anzeige-Informationen an die Benutzervorrichtung gemäß der Nachricht zu senden.

8. Heimagent nach Anspruch 6, worin der Heimagent ferner Folgendes umfasst:
ein erstes Empfangsmodul (68), das konfiguriert ist, zweite Anzeige-Informationen von der Benutzervorrichtung zu empfangen, worin die zweiten Anzeige-Informationen dafür verwendet werden, dem Heimagenten anzuzeigen, dass die Benutzervorrichtung in der Lage ist, ein Multi-Registrierungs-Fluss-Binden zu unterstützen.

9. Heimagent nach einem der Ansprüche 6 bis 8, worin in durch das dritte Generation-Partnerschaft-Projekt, das 3GPP, das Multi-Registrierungs-Fluss-Binden eine IP-Flussmobilität ist.

10. Benutzervorrichtung, umfassend:
ein zweites Empfangsmodul (72), das konfiguriert ist, erste Anzeige-Informationen vom Heimagenten zu empfangen, wenn die Benutzervorrichtung eine Mobile-Internet-Protokoll-Version 6, MIPV6, Sicherheitszuordnung mit einem Heimagenten, erstellt, worin die ersten Anzeige-Informationen verwendet werden, der Benutzervorrichtung anzuzeigen, dass der Heimagent in der Lage ist, ein Multi-Registrierungs-Fluss-Binden zu unterstützen; und
ein Bestimmungsmodul (74), das konfiguriert ist, zu bestimmen, ob ein Multi-Registrierungs-Fluss-Binden an den Heimagenten gemäß den ersten Anzeige-Informationen gestartet werden soll.

11. Benutzervorrichtung gemäß Anspruch 10, worin die Benutzervorrichtung ferner Folgendes umfasst:
ein zweites Sendemodul (82), das konfiguriert ist, eine Nachricht an den Heimagenten zu senden, worin die Nachricht Informationen enthält, mit denen abgefragt wird, ob der Heimagent ein Multi-Registrierungs-Fluss-Binden unterstützt.

## Revendications

1. Procédé pour traiter de multiples accès, comprenant les étapes suivantes :
lorsqu'un équipement d'utilisateur établit une association de sécurité de protocole Internet mobile version 6, MIPV6, avec un agent de rattachement, l'agent de rattachement envoie une première information d'indication à l'équipement d'utilisateur, où la première information d'indication est utilisée pour indiquer à l'équipement d'utilisateur que l'agent de rattachement peut supporter une liaison de flux à enregistrements multiples ; et
après avoir envoyé la première information d'indication à l'équipement d'utilisateur par l'agent de rattachement, le procédé comprend en outre l'étape suivante : l'équipement d'utilisateur détermine si une liaison de flux à enregistrements multiples doit être initiée vers l'agent de rattachement conformément à la première information d'indication.

2. Procédé selon la revendication 1, dans lequel l'étape comprenant d'envoyer la première information d'indication à l'équipement d'utilisateur par l'agent de rattachement comprend les étapes suivantes :
l'agent de rattachement reçoit un message depuis l'équipement d'utilisateur, où le message achemine une information demandant si l'agent de rattachement supporte une liaison de flux à enregistrements multiples ; et
l'agent de rattachement envoie la première information d'indication à l'équipement d'utilisateur conformément au message.

3. Procédé selon la revendication 1, dans lequel, avant d'envoyer la première information d'indication à l'équipement d'utilisateur par l'agent de rattachement, le procédé comprend en outre l'étape suivante :
l'agent de rattachement reçoit une seconde information d'indication depuis l'équipement d'utilisateur, où la seconde information d'indication est utilisée pour indiquer à l'agent de rattachement que l'équipement d'utilisateur peut supporter une liaison de flux à enregistrements multiples.

4. Procédé selon l'une quelconque des revendications 1 à 3, dans lequel l'agent de rattachement comprend : une passerelle de réseau à commutation de paquets, P-GW.

5. Procédé selon l'une quelconque des revendications 1 à 4, dans lequel, dans des systèmes définis par le projet de partenariat de troisième génération, 3GPP, la liaison de flux à enregistrements multiples est une mobilité de flux IP.

6. Agent de rattachement, comprenant :
un premier module d'envoi (62), configuré pour envoyer, lorsqu'un équipement d'utilisateur établit une association de sécurité de protocole Internet mobile version 6, MIPV6, avec l'agent de rattachement, une première information d'indication à l'équipement d'utilisateur, où la première information d'indication est utilisée pour indiquer à l'équipement d'utilisateur que l'agent de rattachement peut supporter une liaison de flux à enregistrements multiples, l'équipement d'utilisateur détermine si une liaison de flux à enregistrements multiples doit être initiée vers l'agent de rattachement conformément à la première information d'indication.

7. Agent de rattachement selon la revendication 6, dans lequel le premier module d'envoi (62) comprend :
un sous-module de réception (64), configuré pour recevoir un message depuis l'équipement d'utilisateur, où le message achemine une information demandant si l'agent de rattachement supporte une liaison de flux à enregistrements multiples ; et
un sous-module d'envoi (66), configuré pour envoyer la première information d'indication à l'équipement d'utilisateur conformément au message.

8. Agent de rattachement selon la revendication 6, dans lequel l'agent de rattachement comprend en outre :
un premier module de réception (68), configuré pour recevoir une seconde information d'indication depuis l'équipement d'utilisateur, où la seconde information d'indication est utilisée pour indiquer à l'agent de rattachement que l'équipement d'utilisateur peut supporter une liaison de flux à enregistrements multiples.

9. Agent de rattachement selon l'une quelconque des revendications 6 à 8, dans lequel, dans des systèmes définis par le projet de partenariat de troisième génération, 3GPP, le liaison de flux à enregistrements multiples est une mobilité de flux IP.

10. Équipement d'utilisateur comprenant :
un second module de réception (72), configuré pour recevoir, lorsqu'un équipement d'utilisateur établit une association de sécurité de protocole Internet mobile version 6, MIPV6, avec un agent de rattachement, une première information d'indication depuis l'agent de rattachement, où la première information d'indication est utilisée pour indiquer à l'équipement d'utilisateur que l'agent de rattachement peut supporter une liaison de flux à enregistrements multiples ; et
un module de détermination (74), configuré pour déterminer si une liaison de flux à enregistrements multiples doit être initiée vers l'agent de rattachement conformément à la première information d'indication.

11. Équipement d'utilisateur selon la revendication 10, dans lequel l'équipement d'utilisateur comprend en outre :
un second module d'envoi (82), configuré pour envoyer un message à l'agent de rattachement, où le message achemine une information demandant si l'agent de rattachement supporte une liaison de flux à enregistrements multiples.
